# DEMANDE DE BREVET EUROPEEN

(11) **EP 1 191 742 A1**
(43) Date de publication de la demande: **27.03.2002**
(21) Numéro de dépôt: 01460054.8
(22) Date de dépôt: 11.09.2001
(51) Int. Cl.: H04L 9/32, H04L 29/06

(54) **Système d'accès à des services personnalisés**

(30) Priorité: 22.09.2000 FR 0012071
(71) Demandeur: Celtipharm.com SA, 22100 Dinan (FR)
(72) Inventeur: Guerin, Patrick. Celtipharm SA.Kérino., 56038 Vannes Cedex (FR)
(74) Mandataire: Maillet, Alain

(57) **Abrégé**

La présente invention concerne un système d'accès à des services personnalisés comprenant un serveur de services personnalisés (10) et une pluralité de terminaux (30) pour permettre à des utilisateurs d'accéder, via un réseau informatique (20), tel que l'Internet, auxdits services offerts par ledit serveur de services (10), ledit serveur (10) étant du type qui comprend des moyens de personnalisation (15) pour personnaliser ledit service offert à un utilisateur après validation de son identité.

Selon l'invention, un terminal (30) comporte des moyens de validation (32, 33) pour valider l'identité de son utilisateur et pour transmettre audit serveur de services (10) un identificateur d'identité validée (UI) qui est utilisé par lesdits moyens de personnalisation (15) dudit serveur (10).

## Description

La présente invention concerne un système d'accès à des services personnalisés. Généralement, un tel système d'accès comprend un serveur de services personnalisés et une pluralité de terminaux pour permettre à des utilisateurs d'accéder, via un réseau informatique, tel que l'Internet, auxdits services offerts par ledit serveur de service.

Généralement également, ledit serveur de services est du type qui comprend des moyens de personnalisation qui permettent de personnaliser le service qui est offert à un utilisateur. Ces moyens de personnalisation comportent dans bien des cas une unité qui permet de valider l'identité de l'utilisateur qui est en train d'accéder à un service. Couramment, cette unité de validation d'identité demande à l'utilisateur d'entrer, sur son terminal, un mot d'entrée LOGIN et un mode de passe PASSWORD qui, s'ils sont corrects, autorisent l'accès au service personnalisé correspondant.

Le problème que posent ces systèmes d'accès à des services personnalisés est que des personnes malintentionnées peuvent pirater l'unité de validation d'identité et se voir alors accéder aux services auxquelles elles n'ont normalement pas droit. On comprendra que cela peut poser d'énormes problèmes lorsque les services proposés sont des services professionnels, en particulier des services de la profession médicale.

Le but de la présente invention est de proposer un système d'accès à des services personnalisés qui soit de structure telle qu'il ne présente pas l'inconvénient évoqué ci-dessus et que l'opération de validation d'identité ne puisse être piratée.

A cet effet, ce sont les terminaux qui comportent des moyens de validation pour valider l'identité de son utilisateur et qui sont prévus pour transmettre audit serveur de service un identificateur d'identité validée qui est utilisé par lesdits moyens de personnalisation dudit serveur.

Avantageusement, ledit identificateur d'identité validée est transmis crypté et sécurisé.

Avantageusement, lesdits moyens de validation sont constitués d'un lecteur de support qui est prévu pour lire des informations qui sont contenues sur ou dans un support. Par exemple, ledit support est une carte, dite carte à puce, et/ou une carte magnétique.

Selon une caractéristique de la présente invention, lesdits moyens de validation sont soit intégrés à un ordinateur constitutif dudit terminal, soit reliés à un ordinateur dont est composé ledit terminal.

La présente invention concerne également un utilisateur destiné à fonctionner dans un système d'accès tel qu'il vient d'être décrit.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. unique est un schéma synoptique d'un système d'accès à des services personnalisés selon la présente invention.

Le système représenté à la Fig. unique est essentiellement constitué d'un serveur de services 10 relié à un réseau informatique 20, par exemple le réseau Internet. Il inclut encore un terminal 30 également relié au réseau informatique 20 de manière à pouvoir accéder, entre autres, aux services qui sont proposés par le serveur de services 10.

Par exemple, le serveur de services 10 propose des services qui sont liés à la distribution de médicaments à des officines, comme le renouvellement d'un stock, la commande de nouveaux médicaments, etc. Quant au terminal 30, il est celui précisément d'une officine qui désire accéder à ces services.

Le terminal 30 est essentiellement constitué d'un ordinateur 31, par exemple un micro-ordinateur, pourvu des moyens nécessaires pour pouvoir communiquer par le réseau informatique 20 avec tous types de serveurs de services tels que le serveur de services 10.

Selon une première caractéristique de la présente invention, le terminal 30 est, de plus, équipé d'un lecteur de support 32 qui est prévu pour pouvoir lire des informations qui sont contenues sur ou dans un support 33 approprié. Par exemple, le support 33 est une carte dite carte à puce ou encore une carte à bande magnétique. Par exemple encore, ladite carte est une Carte de Professionnel de Santé.

Parmi les informations qui sont stockées dans ou sur le support 33, il y a des informations relatives à l'identification de son titulaire. Lorsque l'utilisateur titulaire (par exemple le pharmacien d'une officine) introduit son support 33 dans le lecteur de support 32, l'ordinateur 31 affiche un message par lequel il demande que soit entré un code secret identifiant l'utilisateur. A partir des informations sur le support 33 et du code secret entré par l'utilisateur, l'ordinateur 31 identifie l'utilisateur titulaire du support 33 et valide son identité. Une fois cette opération de validation réalisée, il transmet, via la ligne 34 et le réseau informatique 20, un identificateur d'identité validée UI concernant cet utilisateur. Cette transmission est faite avantageusement de manière cryptée et sécurisée.

Une autre fonction du terminal 30 est d'émettre, via la ligne 34 et le réseau informatique 20, à destination du serveur de services avec lequel il est en communication, des informations générales ou particulières Inf et des requêtes Req.

La fonction du serveur de services 10 est essentiellement de recevoir les informations Inf et requêtes Req transmises par un terminal d'utilisateur 30 avec lequel il est communication et, en fonction de ces informations Inf et de ces requêtes Req, de transmettre audit utilisateur des données qui sont, soit des pages P directement affichables sur l'écran du terminal 31, soit des éléments de page Eₚ qui viennent s'inscrire sur ledit écran à la place désirée. Cette transmission bidirectionnelle des données est réalisée par l'intermédiaire de la ligne 11, du réseau informatique 20 et de la ligne 34 (également bidirectionnelle).

On notera que le terminal 30 est prévu pour afficher sur l'écran de son ordinateur 31 soit les pages P transmises par un serveur de services, soit les éléments de page Eₚ.

Selon une autre caractéristique de la présente invention, le serveur de services 10 comprend un serveur proprement dit 12 dont les fonctions essentiellement sont, d'une part, la réception des informations Inf et requêtes Req issues d'un terminal 30 et, d'autre part, l'émission de pages P ou éléments de page Eₚ. Il comprend encore une base de données 13 dans laquelle sont répertoriés l'ensemble des pages et éléments de page que le serveur 12 peut transmettre.

Selon une autre caractéristique de la présente invention, il comprend encore une base de données 14 qui répertorie, pour chaque identificateur d'identité validée UI d'utilisateur enregistré dans le système, des informations relatives aux pages et éléments de page qui sont disponibles à l'utilisateur correspondant.

Il comprend enfin une unité de personnalisation de page 15 qui, sur la base des données fournies, d'une part, par la base de données des contenus 13 et, d'autre part, par la base de données des utilisateurs 14, ainsi que sur la base des informations Inf et requêtes Req transmises par l'utilisateur, conforme des pages P avec des éléments de page Eₚ spécifiques à l'utilisateur et ainsi que des éléments de page Eₚ également spécifiques à l'utilisateur. Ces pages P ainsi que ces éléments de page Eₚ ainsi conformés sont délivrés au serveur 12 qui les transmet alors, via la ligne 11, le réseau 20 et la ligne 34, au terminal 30 qui les affiche sur l'écran de son ordinateur 31.

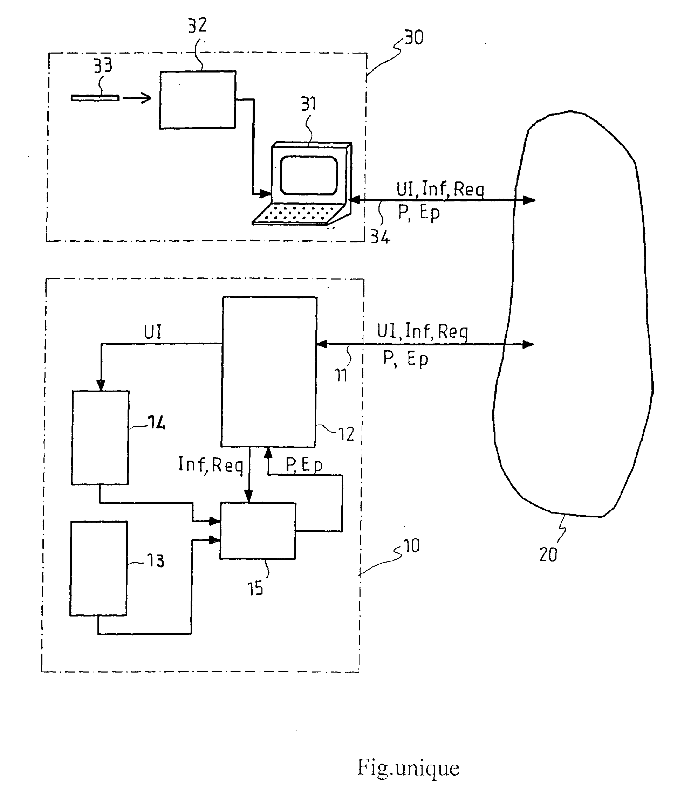

## Revendications

1. Système d'accès à des services personnalisés comprenant un serveur de services personnalisés (10) et une pluralité de terminaux (30) pour permettre à des utilisateurs d'accéder, via un réseau informatique (20), tel que l'Internet, auxdits services offerts par ledit serveur de services (10), ledit serveur (10) étant du type qui comprend des moyens de personnalisation (15) pour personnaliser ledit service offert à un utilisateur après validation de son identité, **caractérisé en ce qu'**un terminal (30) comporte des moyens de validation (32, 33) pour valider l'identité de son utilisateur et pour transmettre audit serveur de services (10) un identificateur d'identité validée (UI) qui est utilisé par lesdits moyens de personnalisation (15) dudit serveur (10).

2. Système d'accès selon la revendication 1, **caractérisé en ce que** lesdits moyens de validation sont constitués d'un lecteur de support (32) qui est prévu pour lire des informations qui sont contenues sur ou dans un support (33).

3. Système d'accès selon la revendication 2, **caractérisé en ce que** ledit support (33) est une carte, dite carte à puce, et/ou une carte magnétique.

4. Système d'accès selon une des revendications 1 à 3, **caractérisé en ce que** lesdits moyens de validation sont intégrés à un ordinateur (31) constitutif dudit terminal (30).

5. Système d'accès selon une des revendications 1 à 3, **caractérisé en ce que** lesdits moyens de validation sont reliés à un ordinateur (31) dont est composé ledit terminal (30).

6. Système d'accès selon une des revendications précédentes, **caractérisé en ce que** ledit serveur d'accès comprend une base de données des contenus (13) dans laquelle sont répertoriés l'ensemble des pages et éléments de page que le serveur (10) peut transmettre, une base de données utilisateur (14) qui répertorie pour chaque utilisateur susceptible d'accéder auxdits services offerts par ledit serveur (10), des informations relatives aux pages et éléments de page qui sont disponibles audit utilisateur, et une unité de personnalisation (15) qui, sur la base des données fournies, d'une part, par la base de données des contenus (13) et, d'autre part, par les données contenues dans ladite base de données utilisateur (14) relativement à l'identificateur d'identité validée (UI) reçu d'un utilisateur, conforme des pages et éléments de page spécifiques pour ledit utilisateur.

7. Terminal pour l'accès d'un utilisateur à des services personnalisés, du type utilisé dans un système d'accès selon une des revendications précédentes, **caractérisé en ce qu'**il comporte des moyens de validation (32, 33) pour valider l'identité de son utilisateur et pour transmettre audit serveur de services (10) un identificateur d'identité validée (UI).

8. Terminal selon la revendication 7, **caractérisé en ce que** lesdits moyens sont constitués d'un lecteur de support (32) qui est prévu pour lire des informations qui sont contenues sur ou dans un support (33).

9. Terminal selon la revendication 8, **caractérisé en ce que** ledit support (33) est une carte, dite carte à puce, et/ou une carte magnétique.

10. Terminal selon une des revendications 7 à 9, **caractérisé en ce que** lesdits moyens de validation sont intégrés à un ordinateur (31) constitutif dudit terminal (30).

11. Terminal selon une des revendications 7 à 9, **caractérisé en ce que** lesdits moyens de validation sont reliés à un ordinateur (31) dont est composé ledit terminal (30).
